# FASCICULE DE BREVET EUROPEEN

(11) **EP 4 586 808 B1**
(45) Date de publication et mention de la délivrance du brevet: **18.11.2026**
(21) Numéro de dépôt: 22790025.5
(22) Date de dépôt: 15.09.2022
(51) Int. Cl.: A01G 3/025, B25B 1/00, B25B 7/00

(54) **DISPOSITIF D'ASSISTANCE À LA MANOEUVRE D'UN OUTIL-PINCE ET OUTIL-PINCE LE COMPORTANT**
VORRICHTUNG ZUR UNTERSTÜTZUNG DES MANÖVERS EINER WERKZEUGKLEMME UND WERKZEUGKLEMME, DIE SIE UMFASST
DEVICE FOR ASSISTING THE MANEUVERING OF A TOOL-CLAMP AND TOOL-CLAMP COMPRISING IT

(43) Date de publication de la demande: 23.07.2025
(73) Titulaire: UBIPRO, 46240 Ussel (FR)
(72) Inventeur: JANICOT, Julien, 46240 USSEL (FR)
(74) Mandataire: Cabinet Boettcher
(86) Numéro de dépôt international: PCT/IB2022/058711
(87) Numéro de publication internationale: WO 2024/057066

(56) Documents cités:
- DE-A1- 3 231 883
- FR-A1- 2 554 674
- US-A1- 2017 204 897

## Description

### Domaine technique

La présente invention est du domaine des dispositifs utilisés pour la manœuvre d'outils-pinces tels que par exemple des pinces de sertissage, de découpage et autres. La présente invention est également du domaine des outils-pinces formés de deux branches articulées autour d'au moins un axe qui divise chaque branche en une mâchoire et une poignée, et dotés de moyens auxiliaires pour l'actionnement de leurs mâchoires par action sur leurs poignées.

### État de la technique antérieure

L'utilisation d'un outil-pince est extrêmement fréquente dans de nombreux domaines industriels. Cet outil peut prendre diverses formes selon l'usage auquel il est destiné. On citera à titre d'exemples les pinces à sertir, à dénuder, à riveter, à souder, les pinces de préhension, les ciseaux, cisailles, tenailles, les sécateurs etc. Les secteurs artisanaux et industriels concernés sont également très divers allant de la câblerie à la maroquinerie en passant par la plomberie, la métallurgie, le bâtiment et la construction automobile.

Dans la plupart des cas, l'usage de ces outils-pinces est manuel, parce que l'automatisation des opérations est impossible bien que celles-ci soient répétitives, du fait, d'une part, qu'elles sont effectuées la plupart du temps dans un environnement qui varie puisque ce sont pour la plupart des outils portatifs, et, d'autre part, qu'elles demandent un savoir-faire, un doigté d'exécution qu'il n'est pas possible de transcrire dans un algorithme.

Les opérateurs concernés sont alors sujets à des troubles musculo-squelettiques au niveau des membres supérieurs (mains, poignets, coudes, épaules ...) qui deviennent rapidement invalidants et, en conséquence ont des répercussions économiques et sociales tant pour les opérateurs eux-mêmes que pour les employeurs et les assurances sociales.

Il est connu d'équiper une pince d'une motorisation indissociable des mâchoires de la pince. Cela conduit à des outils lourds et peu maniables. On citera par exemple le document CN210046543U relatif à une pince dédiée au démontage des pneumatiques, équipée d'un ressort à gaz et d'un ressort de compression à spires non jointives constituant une assistance à l'actionnement manuel de la pince.

Il est également connu du document FR1089020 un échenilloir pour couper à distance des branches d'arbustes ou d'arbres, formé d'un sécateur fixé par un de ses deux bras en extrémité distale d'une perche tubulaire rigide. Le sécateur est manœuvré à distance par un câble fixé par une de ses deux extrémités à l'autre bras du sécateur et par son autre extrémité à une poignée de manœuvre installée de manière articulée en zone proximale de la perche. Cette poignée est prévue pour être maniée par l'utilisateur. Des dispositions analogues se retrouvent dans le document FR2554674 ainsi que dans DE816616 et DE3231883.

Il existe donc un besoin, mal voire non satisfait, de soulager les efforts que doit développer un opérateur de ce type d'outils afin de limiter les inconvénients mentionnés ci-dessus, tout en préservant la qualification de cet opérateur, son savoir-faire et sa dextérité qu'il pourra continuer d'exercer sans gêne importante.

### Exposé de l'invention

À cet effet, l'invention a pour objet un dispositif d'assistance à la manœuvre et au serrage d'un outil-pince, lequel possède deux branches articulées autour d'au moins un axe qui divise chaque branche en une mâchoire et une poignée. Ce dispositif d'assistance à la manœuvre et au serrage se caractérise essentiellement en ce qu'il comporte :
- deux mécanismes de fixation prévus pour être montés de manière amovible, en serrage, pour l'un sur l'une des poignées de l'outil-pince et pour l'autre sur l'autre poignée,
- une unité d'actionnement, équipée :
- d'un actionneur constitué par un organe moteur possédant un élément actif sur lequel un mouvement et un effort de traction sont disponibles, ledit élément actif étant déplaçable le long d'une course travail entre une position d'origine et une position finale, et ensuite le long d'une course retour entre la position finale et la position d'origine, ledit actionneur étant fixé à un support rigide,
- d'un moyen de transmission d'effort et de mouvement comportant ou formé par une transmission de Bowden solidarisée aux deux mécanismes de fixation et liée cinématiquement à l'élément actif de l'actionneur afin que l'activation de l'actionneur conduise au rapprochement et au serrage des deux mâchoires de l'outil-pince lorsque ce dernier est solidarisé aux deux mécanismes de fixation, ladite transmission de Bowden étant formée d'une gaine souple et d'un câble monté en coulissement dans la gaine souple,
- un circuit de commande et de puissance, fonctionnellement associé à l'actionneur que comporte l'unité d'actionnement, ledit circuit comportant au moins un organe de commande par action duquel est délivré un signal d'activation de l'actionneur, ledit organe de commande étant prévu pour être actionné manuellement par l'utilisateur de l'outil-pince.

Ces dispositions permettent l'équipement d'un outil-pince avec une source d'énergie mécanique éloignée de l'outil-pince. Ce dernier conserve donc sa maniabilité initiale et, pour l'opérateur, outre le soulagement qu'elles apportent, lui conservent toutes les possibilités d'exercer son habileté et son savoir-faire comme avec un outil standard. En outre, elles permettent d'équiper un outil-pince sans qu'il soit besoin de modifier ce dernier, lequel conserve alors pleinement toutes ses caractéristiques fonctionnelles.

La transmission de Bowden, selon une autre caractéristique de l'invention, est solidarisée par sa gaine à l'un des mécanismes de fixation et par son câble à l'autre mécanisme de fixation. De plus, toujours par sa gaine, la transmission de Bowden est solidarisée à l'unité d'actionnement et par son câble est liée cinématiquement à l'élément actif de l'actionneur.

Selon une autre caractéristique du dispositif d'assistance selon l'invention, l'un au moins des mécanismes de fixation porte un organe de préhension et de manipulation prévu pour être saisi par l'utilisateur de l'outil-pince en vue de la manipulation de ce dernier, ledit organe de préhension étant équipé de l'organe de commande que comporte le circuit de commande et de puissance.

Selon une autre caractéristique de l'invention chaque mécanisme de fixation est formé, d'une part d'un collier ouvert et d'un moyen de constriction prévus tous deux pour être engagés autour de l'une des poignées de l'outil-pince, et d'autre part d'une platine rigidement fixée au collier ouvert et recevant au moins l'un des éléments de la transmission de Bowden.

Le collier, selon une autre caractéristique de l'invention, comprend une aile basale et deux ailes latérales élastiquement déformables prévues pour être appliquées fermement, avec l'aile basale, contre la poignée correspondante de l'outil-pince par le moyen de constriction. Comme on le comprend, sous l'effet de l'action du moyen de constriction, le logement interne que déterminent les différentes ailes du collier se rétrécit et celles-ci viennent pincer fermement la poignée correspondante de l'outil-pince. Cette immobilisation garantit une bonne transmission aux mâchoires de l'outil-pince de l'effort de serrage généré par l'actionneur et appliqué aux poignées de l'outil-pince par la transmission de Bowden.

Selon une autre caractéristique de l'invention, la platine que comporte chaque mécanisme de fixation est équipée d'un tenon, de section droite prismatique, et l'aile basale du collier de chaque mécanisme de fixation comporte une mortaise dans laquelle est engagé et fixé le tenon.

Selon encore une autre caractéristique de l'invention, la platine à l'opposé du tenon, comporte un talon d'appui prévu pour venir en appui contre la poignée correspondante de l'outil-pince.

Selon une autre caractéristique de l'invention, la platine à distance du talon d'appui est équipée d'un étrier articulé, de fixation de l'un des éléments - câble ou gaine - de la transmission de Bowden.

L'actionneur que comporte l'unité d'actionnement est de préférence du type de ceux dont l'élément actif est déplacé de manière linéaire, mais, alternativement pourra être utilisé un actionneur dont l'élément actif est déplacé en rotation. L'actionneur peut être de toute forme connue comme par exemple un vérin électrique ou pneumatique ou hydraulique.

Le mouvement linéaire de l'élément actif d'un tel actionneur peut être transmis au câble de la transmission de Bowden directement mais de préférence, selon une autre caractéristique de l'invention, l'unité d'actionnement est dotée d'un moyen de transmission de mouvement et d'effort, de raison adaptée aux particularités fonctionnelles de l'outil-pince et de la tâche à accomplir, couplé d'une part à l'élément actif de l'actionneur et d'autre part au câble de la transmission de Bowden, la raison (ou rapport de transmission), du moyen de transmission étant définie comme le rapport entre la valeur du déplacement de l'élément actif et la valeur du déplacement du câble de la transmission de Bowden.

Selon une autre caractéristique de l'invention, la raison du moyen de transmission et de mouvement est variable au cours de la course travail de l'élément actif de l'actionneur.

De préférence, selon une autre caractéristique de l'invention, la raison du moyen de transmission, au cours de la course travail de l'élément actif de l'actionneur, est d'abord supérieure à l'unité et ensuite en fin de course travail, est inférieure à l'unité.

Selon une autre caractéristique de l'invention, l'actionneur se présente sous la forme d'un « muscle » formé d'une enceinte étanche, élastiquement déformable et substantiellement longiforme, prévue pour être alimentée en fluide sous pression, présentant deux extrémités axialement opposées, dont la première est équipée de l'élément actif et la seconde d'un organe de fixation à un support, ladite enceinte étant apte à se contracter axialement sous l'effet d'un accroissement de la pression du fluide introduit dans son volume interne. Un tel type d'actionneur est décrit notamment dans le document FR2076768. Un tel actionneur est disponible sur le marché.

Selon une caractéristique additionnelle de l'invention, le moyen de transmission d'effort et de mouvement que comporte l'unité d'actionnement est formée :
- d'au moins une came-disque, menante, agencée en poulie à gorge, entraînée en rotation par le mouvement de l'élément actif de l'actionneur, par l'entremise d'au moins un premier lien souple d'entraînement, inextensible, apte à être enroulé sur la came-disque menante, ledit premier lien souple étant fixé d'une part à l'élément actif de l'actionneur et d'autre part à la came-disque menante,
- d'au moins une came-disque menée agencée en poulie à gorge, en relation de coaxialité avec la came-disque menante et accouplée à cette dernière, le câble de la transmission de Bowden étant solidarisé à la came-disque menée par l'entremise d'au moins un second lien souple d'entraînement, inextensible, apte à être enroulé sur la came-disque menée, ledit second lien étant fixé d'une part à la came-disque menée et d'autre part au câble de la transmission de Bowden,
- lesdites cames-disques menante et menée étant montées en rotation sur un même axe porté par le support rigide.

Par ces dispositions est formé un système bielle-manivelle dont la bielle, de longueur variable, est formée par l'actionneur prolongé du premier lien souple d'entraînement et dont la manivelle est formée par les cames-disques.

Selon encore une autre caractéristique de l'invention, le rayon d'enroulement déterminé par le profil de chaque came-disque, est progressivement croissant pour la ou chaque came-disque menante et progressivement décroissant pour la ou chaque came-disque menée, en considérant le sens de leur mouvement de rotation depuis une position d'origine correspondant à l'état inactif de l'actionneur selon lequel il est axialement déployé, vers une position finale correspondant à l'état actif de l'actionneur selon lequel il est axialement contracté. De cette manière, lorsque le dispositif d'assistance est associé à un outil-pince, et lorsque l'actionneur est activé, est obtenu d'abord un mouvement rapide des mâchoires l'une vers l'autre, et ensuite un mouvement selon une vitesse réduite accompagné d'un effort disponible de serrage d'intensité accrue. De plus, ces dispositions sont intéressantes dans le cas d'espèce pour les courses utiles requises (18-20cm) car il constitue la chaîne de transmission compacte, en comparaison notamment avec une transmission par engrenage.

Selon une autre caractéristique de l'invention, les cames-disques ont un profil spiral, préférentiellement en spirale logarithmique.

Préférentiellement, selon une autre caractéristique de l'invention, les cames-disques menante et menée, l'actionneur et le câble de la transmission de Bowden sont déplacés vers leur position finale à l'encontre de l'action d'un organe élastique de rappel.

Selon une autre caractéristique de l'invention, l'actionneur se présente sous la forme d'un «muscle» formé d'une enceinte étanche, élastiquement déformable et substantiellement longiforme, prévue pour être alimentée en fluide sous pression, présentant deux extrémités axialement opposées, dont la première est équipée de l'élément actif et la seconde d'un organe de fixation à un support, ladite enceinte étant apte à se contracter axialement sous l'effet d'un accroissement de la pression du fluide introduit dans son volume interne. Un tel type d'actionneur est décrit notamment dans le document FR2076768. Un tel actionneur est disponible sur le marché.

Selon une autre caractéristique de l'invention, l'actionneur est solidarisé par son organe de fixation à un joint rotule fixé au support rigide. De par cette disposition, l'actionneur peut s'orienter dans la direction des efforts de traction appliqués sur le premier lien souple d'entraînement.

Selon une autre caractéristique de l'invention, l'actionneur est solidarisé au support rigide de manière ajustable en position axiale. Une telle disposition permet d'ajuster l'allonge du câble de la transmission de Bowden c'est-à-dire la longueur de câble entre les poignées de l'outil-pince.

Selon une autre caractéristique de l'invention, lorsque le dispositif d'actionnement est solidarisé à l'outil-pince, le circuit de commande et de puissance est adapté à maintenir les mâchoires de l'outil-pince dans une position d'attente, de pré-serrage, intermédiaire entre leur position de pleine ouverture et leur position de pleine fermeture.

La présente invention a également pour objet un outil-pince du type de ceux possédant deux branches articulées autour d'au moins un axe qui divise chaque branche en une mâchoire et une poignée. Cet outil-pince se caractérise essentiellement en ce qu'il est équipé d'un dispositif d'assistance selon l'invention.

### Bref exposé des figures

L'invention sera mieux comprise à la lecture de la description d'une forme préférée de réalisation donnée à titre d'exemple non limitatif en se référant aux dessins annexés dans lesquels :
[Fig.1] est un schéma illustrant le dispositif de l'invention et sa fonctionnalité.
[Fig.2] illustre fonctionnellement un mécanisme de fixation selon une première forme de réalisation du dispositif selon l'invention, à l'une des poignées d'un outil-pince manuel.
[Fig.3] illustre par un schéma, l'actionneur mis en œuvre dans l'invention au repos.
[Fig.4] illustre par un schéma, l'actionneur mis en œuvre dans l'invention en service.

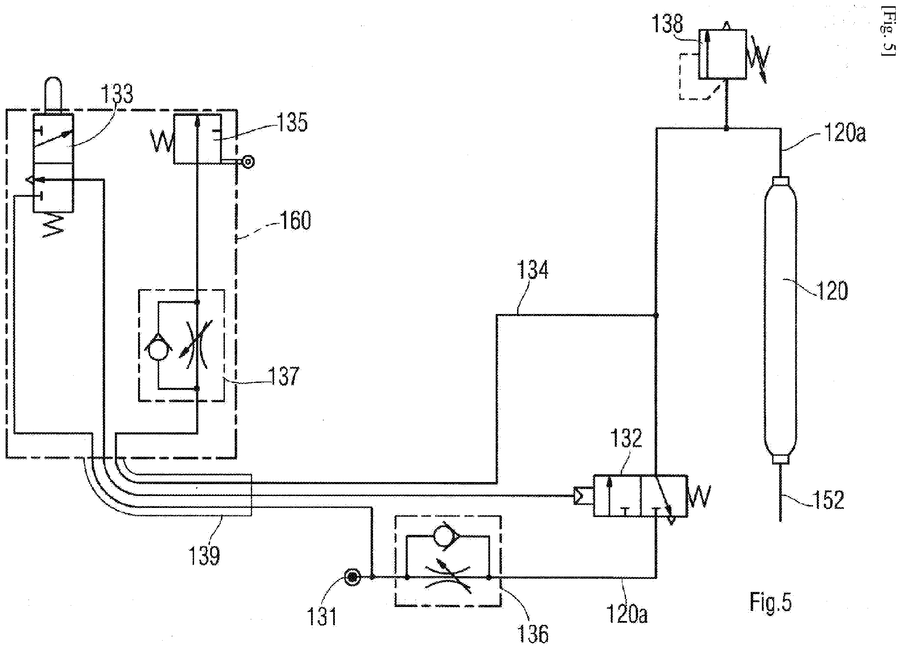

[Fig.5] illustre par un schéma, une réalisation pneumatique du circuit de commande et de puissance de l'actionneur.

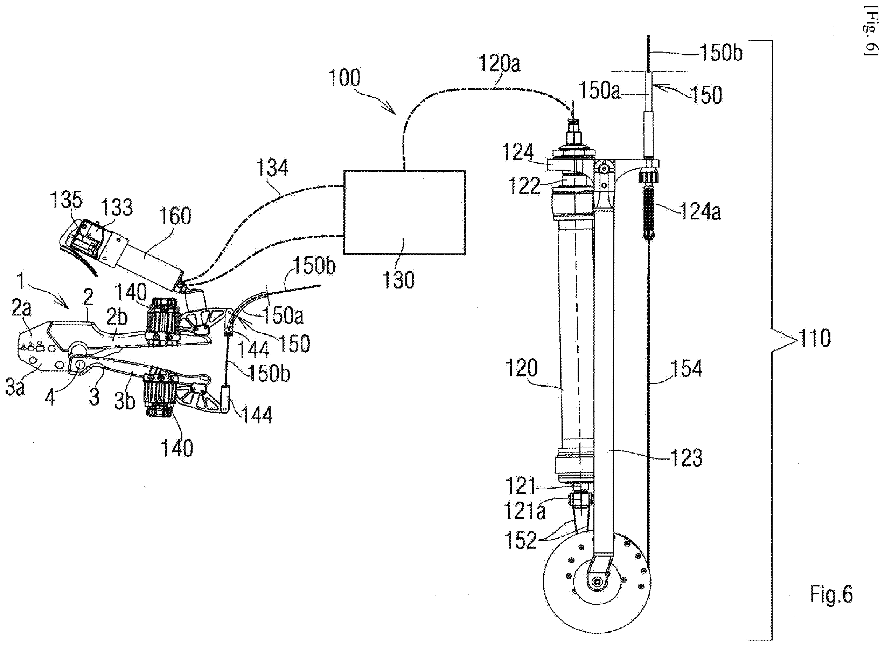

[Fig.6] est une vue d'ensemble d'un dispositif d'assistance selon l'invention associé à un outil pince. Les conduites pneumatiques sont représentées en trait mixe fort sur cette figure.
[Fig.7] est une vue de détail de l'unité d'actionnement montrant plus particulièrement le moyen de transmission d'effort et de mouvement équipant cette unité, certaines flasques équipant ledit moyen n'étant pas représentées pour des raisons de clarté.
[Fig.8] est une vue selon la flèche F de la [Fig.7].
[Fig.9] est une vue de détail de l'unité d'actionnement montrant la fixation de l'actionneur à son support rigide.
[Fig.10] est une vue en coupe longitudinale de l'un des deux mécanismes de fixation.
[Fig.11] est une vue en perspective du collier de l'un des deux mécanismes de fixation.
[Fig.12] est une vue de profil du collier de l'un des deux mécanismes de fixation.
[Fig.13] est une vue en coupe selon la ligne AA de la [Fig.12].
[Fig.14] est une vue de détail, partielle, en coupe de l'organe de préhension.
[Fig.15] est une vue en perspective d'une autre forme de réalisation de la noix de liaison.
[Fig.16] est une vue en perspective d'une structure support réglable prévue pour accueillir en fixation par l'entremise de l'un des mécanismes de fixation, un outil-pince actionné par un dispositif selon l'invention, la transmission de Bowden n'étant pas représentée sur cette figure.

### Description de modes préférés de réalisation de l'invention

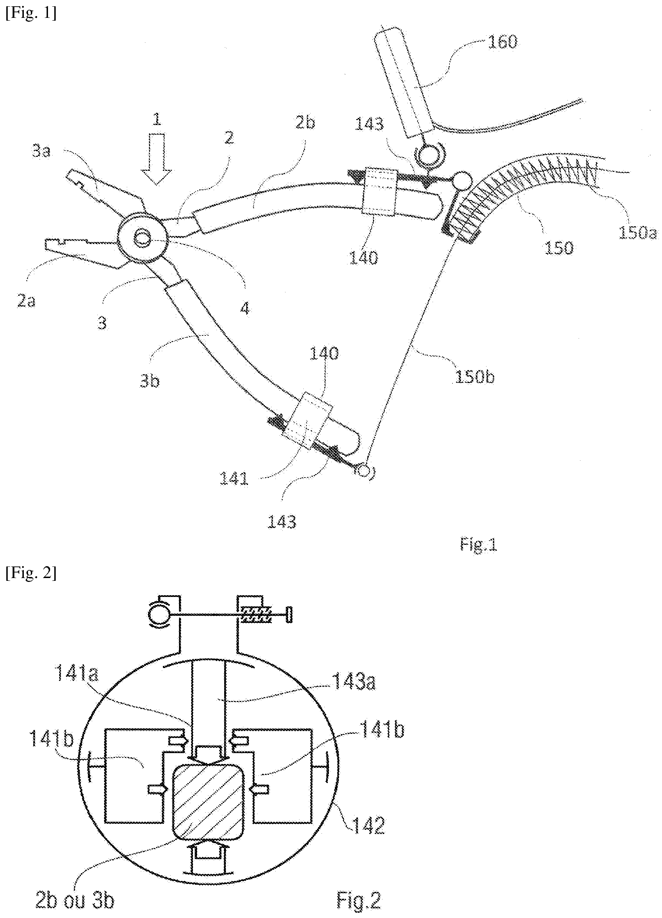

On a représenté en [Fig.1] un dispositif d'assistance 100 pour la manœuvre d'un outil-pince 1 comportant deux branches 2 et 3 articulées autour d'au moins un axe 4. Cet axe divise chacune des branches en une mâchoire 2a, 3a, et une poignée 2b, 3b. Cet outil-pince est équipé d'un organe élastique de rappel sollicitant les deux branches 2, 3 vers la position de pleine ouverture des mâchoires 2a, 3a.

Conformément à l'invention, le dispositif d'assistance 100, de préférence transportable, comporte une unité d'actionnement 110 équipée d'un actionneur 120, un circuit 130 de commande et de puissance, fonctionnellement associé à l'actionneur 120, apte à activer et désactiver ce dernier, deux mécanismes de fixation 140 prévus pour être montés de manière amovible, en serrage, pour l'un sur l'une des poignées 2b de l'outil-pince et pour l'autre sur l'autre poignée 3b, et un moyen de transmission d'effort et de mouvement comportant ou formé par une transmission de Bowden 150, ledit moyen de transmission étant couplé, d'une part à l'actionneur 120, et est prévu pour être solidarisé d'autre part, par l'intermédiaire des mécanismes amovibles de fixation 140, aux deux poignées 2b, 3b de l'outil-pince 1 afin que l'activation de l'actionneur 120 conduise au rapprochement et au serrage des deux mâchoires 2a, 3a dudit outil-pince 1.

La transmission de Bowden 150 est formée d'une gaine 150a dans laquelle est montée en coulissement un câble 150b de préférence en acier.

L'actionneur 120 est constitué par un organe moteur possédant un élément actif 121 sur lequel un mouvement et un effort de traction sont disponibles, le moyen de transmission d'effort et de mouvement étant lié cinématiquement à l'élément actif 121. Cet élément actif 121, lorsque l'actionneur est activé, est déplaçable le long d'une course travail entre une position d'origine et une position finale, et ensuite lorsque l'actionneur 120 est désactivé et déplaçable le long d'une course retour entre la position finale et la position d'origine.

L'actionneur 120 peut être du type de ceux dont l'élément actif 121 est déplaçable en rotation, mais, de préférence, est utilisé un actionneur dont l'élément actif est déplaçable linéairement. Selon ce cas de figure, l'actionneur pourra être constitué par un vérin pneumatique ou hydraulique ou électrique, mais de préférence, l'actionneur 120 est formé par un muscle, c'est-à-dire par une enceinte longiforme tubulaire apte à accueillir un fluide sous pression et apte à se dilater radialement et simultanément à se contracter axialement sous l'effet de la pression interne générée par le fluide sous pression. Ce fluide sous pression peut être un gaz ou un liquide. Cette enceinte tubulaire présente deux extrémités axialement opposées se rapprochant l'une de l'autre par déformation de l'actionneur sous l'effet de l'action du fluide sous pression. La première de ces deux extrémités porte l'élément actif 121, tandis que la seconde porte un organe de fixation 122 à un support rigide, lesdites deux extrémités étant formées chacune par un bouchon d'obturation étanche de l'enceinte tubulaire. L'organe de fixation 122 prolonge axialement le bouchon formant la seconde extrémité. L'organe de fixation et le bouchon formant la seconde extrémité sont dotés d'un perçage traversant axial formant un conduit d'alimentation de l'actionneur en fluide sous pression. L'avantage d'un tel actionneur réside dans le fait qu'il ne présente aucune pièce mécanique soumise à usure.

Le support rigide, selon une forme préférée de réalisation, est formé de deux colonnes 123 rigides, tubulaires, disposées parallèles à écartement l'une de l'autre, réunies à l'une de leurs extrémités par une embase 124 à laquelle est solidarisé l'actionneur 120 par l'entremise de son organe de fixation 122. De préférence, l'actionneur 120 est solidarisé de manière ajustable en position axiale à l'embase 124. Une telle disposition permet d'ajuster la longueur d'allonge du câble de Bowden.

Préférentiellement, la première extrémité de l'actionneur 120 porte des patins 125 de glissement contre les deux colonnes 123. Cette disposition limite les mouvements latéraux de l'actionneur lors du transport ou de la manipulation du dispositif d'assistance 100.

Avantageusement, le moyen de transmission d'effort et de mouvement, outre la transmission de Bowden 150, comprend :
- au moins une came-disque menante 151, agencée en poulie à gorge, entraînée en rotation par le mouvement de l'élément actif 121 de l'actionneur, par l'entremise d'au moins un premier lien souple 152 d'entraînement, inextensible, enroulé au moins partiellement sur la came-disque 151 menante, ledit ou chaque dit premier lien souple 152 étant lié d'une part à l'élément actif de l'actionneur et d'autre part à la came-disque menante 151 et,
- au moins une came-disque menée 153, agencée en poulie à gorge, en relation de coaxialité avec la came-disque 151 menante et accouplée à cette dernière, le câble 150b de la transmission de Bowden étant solidarisé à la came-disque menée 153 par l'entremise d'au moins un second lien souple 154 d'entraînement, inextensible, apte à être enroulé au moins partiellement sur la came-disque menée, ledit second lien 154 étant fixé d'une part à la came-disque menée et d'autre part au câble de la transmission de Bowden.

Avantageusement, les liens souples de transmission sont réalisés en une matière de synthèse à haute résistance mécanique telle qu'un polyamide aromatique, par exemple celle connue sous le nom commercial de KEVLAR.

De préférence, la raison du moyen de transmission est variable au cours de la course travail de l'élément actif 121, d'abord supérieure à l'unité et ensuite, en fin de course travail de l'élément actif 121 de l'actionneur 120, inférieure à l'unité. De cette manière, est obtenu en tout début de la course travail, un mouvement rapide du câble de la transmission de Bowden dans sa gaine de vitesse progressivement décroissante accompagné d'un effort de traction disponible d'intensité régulièrement croissante. Ainsi en fin de course travail, le mouvement du câble dans la gaine s'effectue selon une vitesse faible. En revanche, l'effort de traction transmis est d'intensité accrue. De cette manière, lorsque le dispositif d'assistance 100 est couplé à un outil-pince, les mâchoires de ce dernier sont d'abord entraînées dans le sens du serrage selon une vitesse relativement élevée et ensuite selon une vitesse réduite, mais avec un effort de serrage disponible plus important.

Afin d'obtenir la variation de la raison de la transmission au cours de la course travail de l'élément actif 121 de l'actionneur 120, le rayon d'enroulement déterminé par le profil de chaque came-disque 151menante est progressivement croissant pour la ou chaque came-disque menante, et progressivement décroissant pour la ou chaque came-disque menée, en considérant le sens de leur mouvement de rotation depuis une position d'origine correspondant à l'état inactif de l'actionneur selon lequel il est axialement déployé, vers une position finale correspondant à l'état actif de l'actionneur selon lequel il est axialement contracté. Le profil d'enroulement de chaque came-disque sera formé préférentiellement par une spirale logarithmique, mais tout autre profil adapté aux particularités fonctionnelles de l'outil-pince et de la tâche à accomplir pourra être adopté. Par rayon d'enroulement il faut entendre la distance normale entre l'axe de rotation de la came disque et son profil d'enroulement.

Les cames menante(s) 151 et menée 153 sont montées en rotation sur un même axe 155 porté par le support rigide et plus particulièrement par les deux colonnes 123 à l'opposé de l'embase 124 que comporte ce dernier. De préférence, ces cames-disques sont équipées de flasques 151a, 153a sous forme de disques circulaires formant en combinaison avec le profil d'enroulement de chaque came-disque, une gorge de réception du lien souple d'entraînement correspondant.

Selon la forme préférée de réalisation, sont prévues deux cames-disques 151 menantes et une came-disque menée 153 disposée entre les deux cames-disques 151 menantes. La ou chaque came-disque 151 menante est pourvue d'un pivot cylindrique 151b formant une saillie radiale sur le profil d'enroulement. Ce pivot 151b est équipé à distance du profil d'enroulement, d'une collerette de rétention et est prévu pour recevoir en enroulement selon un demi-tour, le lien souple 152 d'entraînement correspondant, ce lien souple étant lié par ailleurs à l'élément actif 121.

En outre, comme on le comprend, du fait de son enroulement partiel autour du pivot, le lien souple 152 forme deux brins liés à l'élément actif 121. Sous l'effet de l'effort de traction développé par l'actionneur, le lien souple 152 peut être amené à glisser sur le pivot. De cette manière, est assuré l'équilibre des tensions mécaniques dans les deux brins formés. Chaque pivot 151b est réalisé en une matière propre à faciliter le glissement du lien souple 152.

De préférence, le ou chaque lien souple 152 d'entraînement de la ou de chaque came-disque menante 151 est lié à l'élément actif 121 de l'actionneur par l'intermédiaire d'une noix de liaison 121a. À cet effet, l'élément actif 121 présente un embout fileté et la noix 121a est équipée d'un taraudage central dans lequel est engagé en vissage l'embout fileté de l'élément actif 120.

Avantageusement, la noix de liaison 121a est agencée pour permettre l'entraînement des deux cames-disques menantes 151 uniquement par un seul lien souple 152 d'entraînement, et également pour permettre de configurer ce lien souple en deux boucles opposées enroulées partiellement autour du pivot 151b que comporte l'une des deux cames-disques menantes 151, et pour l'autre, autour du pivot 151b que comporte l'autre came-disque menante 151. À cet effet, la noix 121 est adaptée à recevoir en fixation les extrémités du lien souple 152 dans une région d'ancrage et comporte à l'opposé de cette région d'ancrage, au moins une face d'appui et de glissement 121d adaptée à recevoir le lien souple 152, ce dernier formant entre la région d'ancrage et la ou les face(s) d'appui 121d, les deux boucles opposées.

Ces dispositions, en combinaison avec le mode particulier de liaison du lien souple 152 avec les cames-disques menantes 151, en autorisant le glissement du lien souple 152 autour des pivots 151b et sur la face d'appui 121d, assurent en permanence un parfait équilibre des efforts dans les différents brins formés par les boucles du lien 152, ainsi qu'un parfait équilibre des longueurs de ces différents brins.

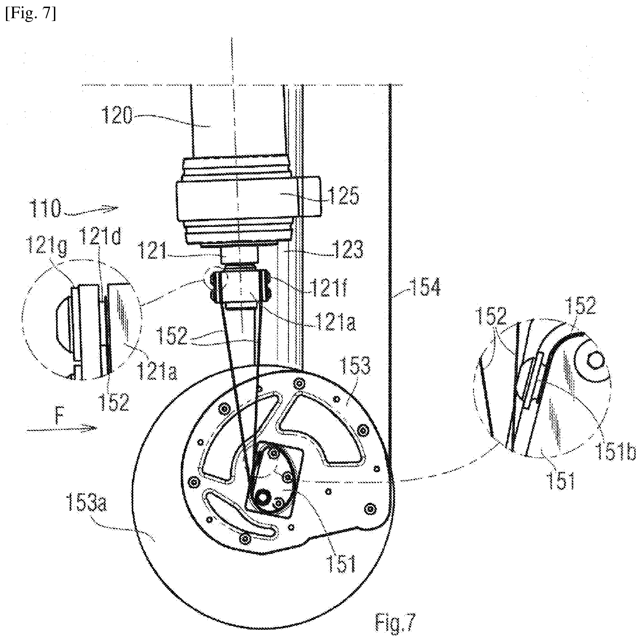

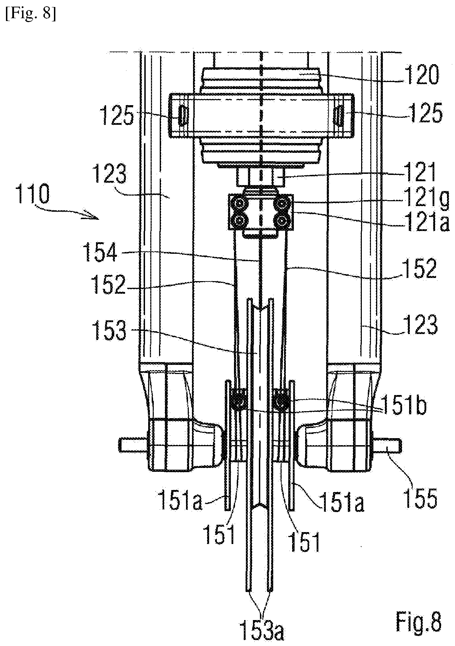

La noix 121a, selon la forme de réalisation visible en Figures 7 et 8, se présente sous la forme d'un corps parallélépipédique, dont l'une des faces latérales forme la région d'ancrage et reçoit à cet effet des vis 121f de fixation des deux extrémités du lien souple 152, et dont la face latérale opposée reçoit deux pivots saillants cylindriques 121g dont la face cylindrique de chacun forme l'une des faces 121d d'appui et de glissement du lien souple 152. De manière plus précise, les vis de fixation 121f sont engagées en vissage dans des taraudages pratiqués dans la noix 121a, depuis la face latérale constitutive de la région d'ancrage, et portent une plaquette commune de serrage du lien souple 152. Les pivots 121g sont fixés par des vis à la face latérale opposée, ces vis étant engagées en vissage dans des taraudages pratiqués dans la noix 121a depuis cette face latérale opposée. Par faces latérales, il faut entendre les faces parallèles à l'axe géométrique de l'actionneur. Les pivots 121g sont réalisés en une matière propre à faciliter le glissement du lien souple 152.

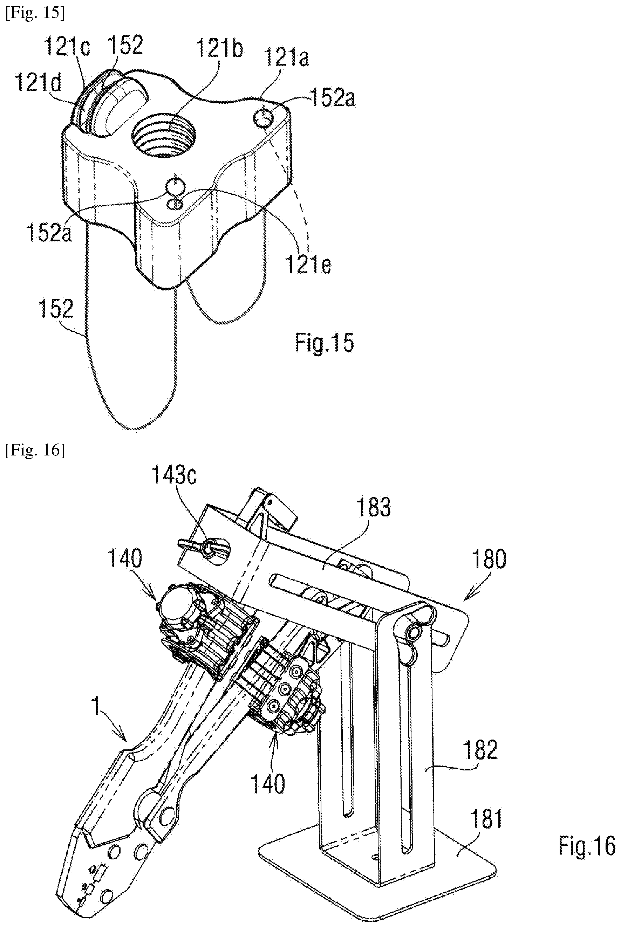

En [Fig.15], est représentée une autre forme de réalisation de la noix de liaison 121a. Cette noix 121a présente deux faces planes normales à l'axe géométrique longitudinal de l'actionneur 120, dont la première est prévue pour être disposée en regard de l'élément actif 121, et dont la seconde est prévue pour être disposée en regard des cames-disques. La région d'ancrage que présente cette noix 121a est formée de deux premiers perçages traversants 121e débouchant dans les première et seconde faces planes dans lesquels sont engagées les sections terminales du lien souple 152. À l'opposé des perçages 121e, la première face plane porte une forme de dôme 121c dotée d'une gorge dont le fond incurvé constitue la face 121d d'appui et de glissement. Cette gorge est prolongée par deux seconds perçages traversants pratiqués dans l'épaisseur de la noix 121a depuis les extrémités de la gorge et débouchant dans la seconde face plane. La noix 121a est réalisée en une matière propre à faciliter le glissement du lien souple 152.

Le lien 152, comme on peut le voir en [Fig.15], est engagé librement depuis la première face plane dans l'un des premiers perçages 121 ; est ensuite engagé librement dans le second perçage en vis-à-vis, et ce, depuis la seconde face plane ; est ensuite engagé librement dans la gorge de la forme de dôme 121c pour prendre appui sur la face d'appui et de glissement 121d ; est ensuite engagé librement dans l'autre second perçage depuis la première face plane ; et enfin est engagé librement dans l'autre premier perçage depuis la seconde face plane. En regard de la première face plane, les deux extrémités du lien 152 reçoivent un élément d'arrêt 152a, ou bien sont nouées l'une à l'autre, ou bien encore présentent chacune un nœud d'arrêt.

On conçoit que lorsque l'actionneur 120 est activé, la contraction axiale de ce dernier engendre, par traction sur le lien souple 152 d'entraînement, le mouvement de rotation des cames-disques menantes et menées, vers leur position angulaire finale. Lors de ce mouvement de rotation, le ou chaque premier lien souple 152 d'entraînement se déroule du profil en spirale de chaque came-disque menante 151, tandis que le second lien souple 154 d'entraînement s'enroule sur le profil en spirale de la came-disque menée 153. Il en résulte un mouvement de coulissement du câble 150b de la transmission de Bowden dans la gaine 150a. Le second lien souple 154 d'entraînement est fixé au câble 150b de la transmission de Bowden par tout moyen connu, par exemple par des serre-câbles.

L'une des deux extrémités de la gaine 150a de la transmission de Bowden 150 est solidarisée par un arrêt de gaine à l'embase 124 du support rigide, et ce dans l'alignement axial d'un perçage traversant pratiqué dans l'embase, traversé par le câble 150b de la transmission de Bowden 150. Dans l'alignement de ce perçage, est disposé un organe élastique de rappel 124a fixé d'une part à l'embase 124, et d'autre part au second lien souple 154 de transmission ainsi qu'au câble 150b. Cet organe élastique est préférentiellement constitué par un ressort cylindrique de traction. Le câble 150b est engagé axialement dans ce ressort. Cette disposition a pour but, d'une part de contenir le câble 150b dans le ressort, et d'autre part de compenser les frottements du câble 150b dans la gaine 150a, et également, lorsque le dispositif d'assistance est en place sur un outil-pince, de renforcer l'action de l'organe élastique de rappel dont est équipé l'outil-pince, cet organe élastique de rappel sollicitant les mâchoires dudit outil-pince vers leur position de pleine ouverture.

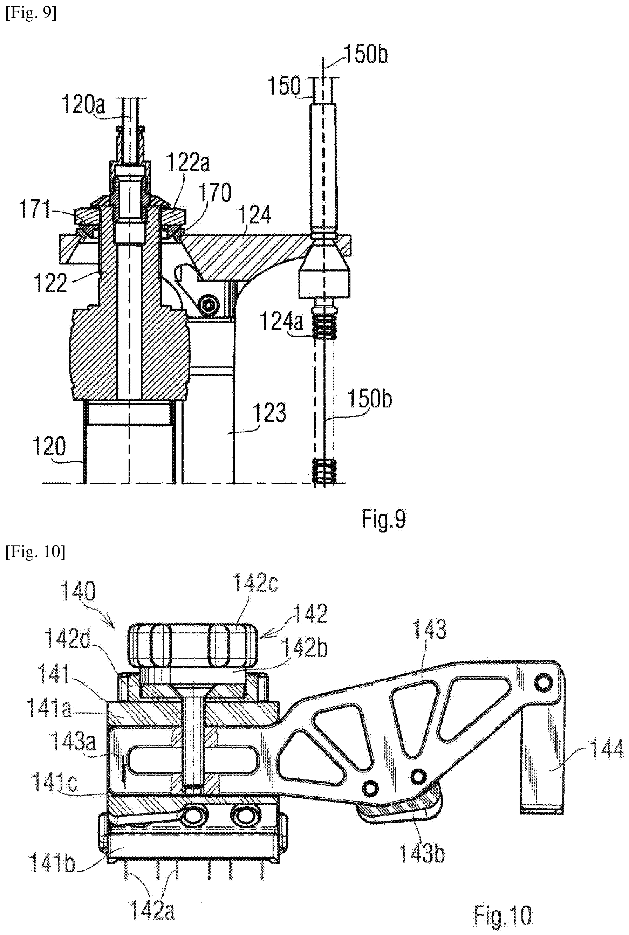

Avantageusement, l'organe de fixation 122 que présente l'actionneur 120 se présente sous la forme d'un embout cylindrique et est solidarisé à l'embase 124 par l'entremise d'un joint rotule formé d'un siège de rotule 170 fixé dans un alésage traversant formé dans l'embase 124, et d'un corps de rotule 171 fixé à l'organe de fixation 122. Comme on peut le voir en [Fig.9], la forme d'embout que présente l'organe de fixation 122 est engagée dans un perçage traversant formé dans le siège rotule 170 et dans un perçage traversant formé dans le corps de rotule 171.

De préférence, l'actionneur 120 est solidarisé à l'embase 124 de manière ajustable en position axiale afin de pouvoir ajuster l'allonge du câble de la transmission de Bowden. Selon une forme pratique de réalisation, l'organe de fixation 122 est fileté, et reçoit un écrou de réglage 122a prenant appui sur le corps de rotule 171. Par la manœuvre de l'écrou, l'actionneur 120 est déplacé axialement, soit en éloignement des cames-disques, soit en rapprochement. Le mouvement d'éloignement, sous l'effet de la traction exercée par le premier lien de transmission, s'accompagne d'une légère rotation des cames disques en direction de leur position angulaire finale et par voie de conséquence, d'un léger enroulement du câble 150b sur le profil en spirale de la came-disque menée. Est obtenue ainsi une réduction de l'allonge du câble.

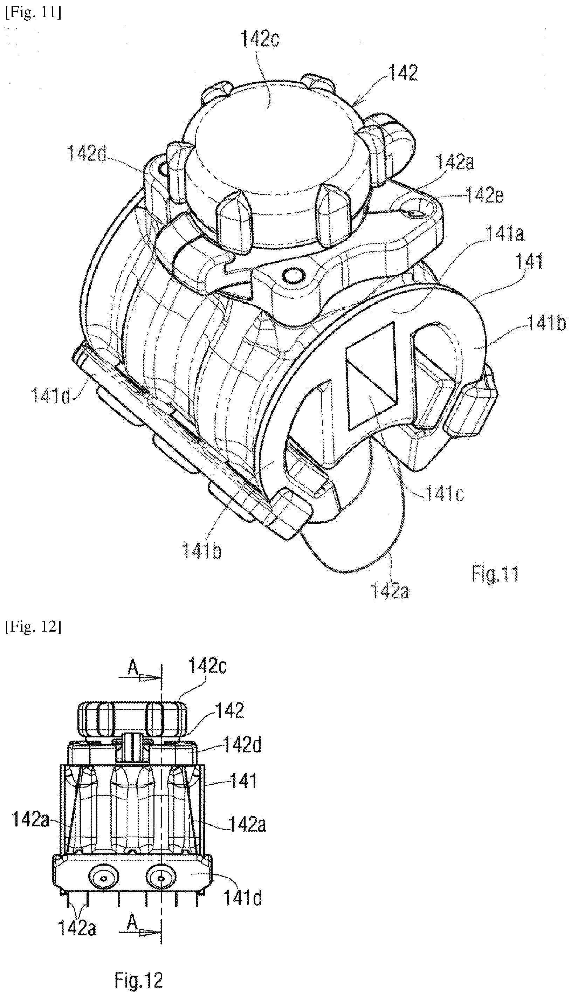

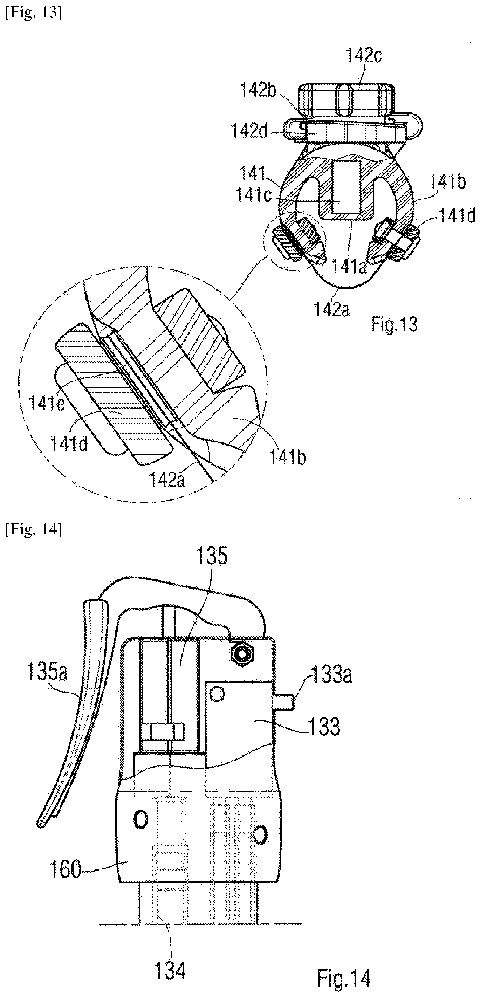

Selon une forme préférée de réalisation, chaque mécanisme de fixation 140 est formé, d'une part d'un collier 141 ouvert, d'un moyen de constriction 142 prévu, avec le collier 141 pour être engagés autour de l'une des poignées de l'outil-pince, et d'autre part d'une platine rigide 143 fermement fixée au collier 141, cette platine recevant au moins l'un des éléments de la transmission de Bowden. Le collier 141 comprend une aile basale 141a et deux ailes latérales 141b élastiquement déformables, préférentiellement incurvées et prévues pour être appliquées fermement, avec l'aile basale, contre la poignée correspondante de l'outil-pince par le moyen de constriction 142. Comme on peut le voir en [Fig.11] et [Fig.13], l'aile basale 141a, entre les ailes latérales 141b, forme un bourrelet longiforme prévu pour venir en appui contre la poignée correspondante de l'outil-pince. Le collier est réalisé en matériau de synthèse par exemple un polyuréthane thermoplastique de 95 Shore de dureté.

Selon la forme de réalisation représentée de manière schématique en [Fig.2], le moyen de constriction 142 est formé par un anneau ouvert portant en extrémité un boulon de serrage, mais selon la forme préférée de réalisation telle que montrée en Figures 10 à 13, le moyen de constriction 142 est formé par un lacet 142a et par un mécanisme 142b de mise en tension à action rapide de serrage et desserrage du lacet 142a. Le mécanisme 142b de mise en tension, connu en soi, est porté par l'aile basale 141a du collier 141 et est logé en partie dans une monture 142d fixée à cette aile basale. Le lacet 142a est fixé par ses deux extrémités au mécanisme 142b de mise en tension. Par ailleurs, le lacet forme plusieurs boucles qui s'étendent d'une aile latérale 141b à l'autre.

De préférence, chaque aile latérale 141b à distance de l'aile basale 141a est équipée d'un flasque 141d doté de plusieurs roulettes 141e sur chacune desquelles s'enroule partiellement le lacet 142a afin de former les différentes boucles. Plus précisément, chaque flasque 141d en combinaison avec l'aile latérale 141b correspondante, détermine un logement dans lequel sont logées les différentes roulettes 141e. Le lacet 142a chemine entre les boucles formées et le mécanisme de mise en tension, le long de l'une des deux ailes latérales 141b, sur la face externe de cette dernière, et s'engage dans deux perçages traversants 142e pratiqués dans la monture 142d. Comme on le comprend, les ailes basale 141a et latérales 141b du collier et le lacet 142a déterminent un logement de constriction prévu pour être engagé autour de l'une des deux poignées de l'outil-pince, ce logement de constriction se resserrant sur lui-même et sur la poignée par action du mécanisme de mise en tension.

Le mécanisme 142b de mise en tension du lacet 142a est de tout type connu. À titre d'exemple, il sera du type de celui décrit dans le brevet US5934599. Ce mécanisme 142b comprend un tambour interne d'enroulement du lacet, accouplé à un train d'engrenage réducteur comportant un dispositif anti-retour débrayable, ce train d'engrenage étant actionné par un bouton de manœuvre 142c.

La platine 143 que comporte chaque mécanisme de fixation, est équipée d'un tenon 143a de section droite prismatique de préférence rectangulaire et l'aile basale 141a du collier 141 de chaque mécanisme de fixation comporte une mortaise 141c dans laquelle est engagé et fixé le tenon 143a de la platine 143, de préférence par une vis. Cette disposition d'assemblage par tenon et mortaise permet de rigidifier l'aile basale du collier, le tenon 143a formant une attelle.

La platine 143, à l'opposé du tenon 143a, comporte un talon d'appui 143b prévu pour venir en appui contre la poignée correspondante de l'outil-pince à proximité de l'extrémité libre de cette poignée. La platine 143 forme une extension s'étendant au-delà du talon, pour recevoir en articulation un étrier de fixation 144 de l'un des éléments câble 150b ou gaine150a de la transmission de Bowden. L'étrier 144 de la platine 143 de l'un des mécanismes de fixation 140 est équipé d'un arrêt de gaine. Cet arrêt de gaine reçoit l'extrémité correspondante de la gaine 150a de la transmission de Bowden, l'étrier 144 de la platine 143 de l'autre mécanisme de fixation recevant en fixation le câble de la transmission de Bowden.

Lors du serrage des mâchoires de l'outil-pince, sous l'effet des actions de serrage exercées tant par la gaine 150a que par le câble 150b, chaque mécanisme de fixation 140 est sollicité en pivotement autour du talon d'appui 143b. Cette sollicitation est contrée par l'action du collier 141 et du moyen de constriction 142 sur la poignée 2b, 3b correspondante de l'outil-pince. La liaison entre chaque mécanisme 140 et la poignée correspondante s'en trouve ainsi renforcée.

Les mécanismes de fixation 140 sont positionnés sur les poignées de l'outil-pince en sorte d'être coplanaires et donc disposés selon le plan géométrique d'ouverture et de fermeture des mâchoires. En raison de l'articulation des étriers 144 à leur platine, et de la position de chaque mécanisme de fixation 140 à égale distance de l'axe géométrique d'articulation, l'une à l'autre, des branches de l'outil-pince, le câble 150b de la transmission de Bowden, au cours du mouvement de serrage se positionne de lui-même de manière orthogonale au plan médian de l'outil-pince, ce plan étant celui contenant ledit axe géométrique d'articulation. L'un au moins des mécanismes de fixation 140 porte un organe 160 de préhension et de manipulation, sous forme de coque fermée, prévu pour être saisi par l'utilisateur de l'outil-pince en vue de la manipulation de ce dernier. Cet organe de préhension 160 est fixé à la platine 143 correspondante, éventuellement de manière amovible, par l'intermédiaire d'un joint rotule par exemple.

Selon une forme préférée de réalisation, le circuit 130 de commande et de puissance utilise la puissance pneumatique, l'actionneur 120 étant alors alimenté en air sous pression à partir d'une source d'air comprimé 131 qui peut être la cuve d'un compresseur, une bonbonne, ou autre. Ce circuit 130 comporte au moins un organe de commande par action duquel est délivré un signal d'activation de l'actionneur, ledit organe de commande étant prévu pour être actionné manuellement par l'utilisateur de l'outil-pince. Préférentiellement, pour des raisons de sécurité, le circuit 130 de commande et de puissance comporte un premier organe de commande 133, et un second organe de commande 135 qui doivent être actionnés simultanément par l'opérateur pour activer l'actionneur 120 selon sa pleine puissance.

L'actionneur 120 est alimenté par une conduite d'alimentation 120a connectée à la source d'air comprimé 131 sur lequel est installée une vanne pilotée 132 monostable, normalement fermée. La pression de pilotage de cette vanne 132, issue de la source 131, est admise au travers du premier organe de commande 133, cet organe de commande étant constitué par un distributeur marche/arrêt, monostable, normalement fermé, logé dans l'organe de préhension 160. Ce premier organe de commande 133 est prévu pour être actionné manuellement par l'opérateur par action sur un bouton de manœuvre 133a formant saillie sur la surface externe de l'organe de préhension 160. L'actionneur 120 est en communication permanente avec un canal de fuite 134 qui débouche à l'atmosphère au niveau de l'organe 160 de préhension, c'est-à-dire à proximité de la main de l'opérateur qui agit sur le bouton de manœuvre 133a du premier organe de de commande 133. Ce canal de fuite 134 est raccordé par un piquage à la conduite d'alimentation 120a. L'existence ou non de cette fuite ressentie par cette main, indique à l'opérateur si l'actionneur est ou non actif. Le canal de fuite 134 est équipé, également au niveau de l'organe de préhension 160, du second organe de commande 135. Ce second organe de commande 135 est constitué par une vanne d'échappement, normalement ouverte, dont la section de passage et donc le débit de fuite sont ajustables manuellement par l'opérateur par le moyen d'une gâchette 135a, ou autre, rappelée par ressort, montée en articulation sur l'organe de préhension 160.

L'actionnement seul de l'organe de commande 133 est insuffisant pour obtenir un serrage efficace des mâchoires de l'outil-pince, voire même la pleine fermeture de ces mâchoires. La totale fermeture du second organe de commande 135 sans action simultanée sur l'organe de commande 133 n'a aucun effet sur l'activation de l'actionneur 120. Une complète fermeture des mâchoires avec effort de serrage conséquent suppose que simultanément soit actionné le premier organe de commande 133 et que la vanne d'échappement constitutive du second organe de commande 135 soit totalement fermée. Ces dispositions ont pour but de renforcer la sécurité d'utilisation tant du dispositif d'assistance que de l'outil-pince. Par ailleurs ces dispositions assurent une grande souplesse d'utilisation en établissant une relation de proportionnalité entre l'effort déployé par l'utilisateur sur la gâchette 135a, représentatif du degré de fermeture partielle du second organe de commande 135, et la position des mâchoires de l'outil-pince.

De préférence, le circuit 130 de commande et de puissance est adapté à maintenir les mâchoires de l'outil-pince dans une position d'attente déterminée, intermédiaire entre leur position de pleine ouverture et leur position de pleine fermeture. Cet effet est obtenu par un réducteur de débit 136 réglable, éventuellement unidirectionnel, disposé sur la conduite d'alimentation 120a en amont ou en aval de la vanne pilotée 132. Par réglage de ce réducteur 136 est obtenu, lorsque le circuit 130 est alimenté en air comprimé, un équilibre entre l'effort déployé par le l'actionneur 122 et les efforts dus à la tension de rappel générés par l'organe élastique de rappel de l'outil-pince, par l'organe élastique 124a et par les forces de frottement du câble 150b dans la gaine 150a. Il donc possible par action sur ce régulateur 136 d'obtenir une position intermédiaire stable des mâchoires de l'outil-pince.

Le canal de fuite 134 peut être pourvu, en amont du second organe de commande 135, d'un second réducteur de débit unidirectionnel 137 (robinet), également réglable. Enfin, une vanne de sécurité 138 à tarage réglable, permet de limiter une montée en pression excessive dans le circuit pneumatique de façon à protéger le dispositif d'assistance et l'opérateur.

Le circuit pneumatique d'alimentation, tel que décrit, de l'actionneur 120 est réglable et adaptable aux différents outils-pinces auxquels le dispositif de l'invention peut être associé et à la source de pression à laquelle il peut être branché. Ainsi, la vanne pilotée 132 étant ouverte ainsi que le réducteur de débit 137 et le second organe de commande 135, on ajuste le débit de sortie du réducteur de débit 136 pour que la pression établie dans l'actionneur 120 provoque un léger raccourcissement de ce dernier, équilibré par les forces résistant à ce raccourcissement que sont les frottements entre câble 150b et gaine 150a et la force des organes de rappel agissant sur la pince dans son état d'ouverture. Puis, le second organe de commande 135 toujours ouvert, on agit sur le réducteur de débit 137 dans le sens de sa restriction de passage pour obtenir un gonflage supplémentaire de l'actionneur 120, et donc une fermeture des mâchoires de l'outil-pince correspondant à une course d'approche de ces dernières avec l'application d'un effort minimal sur la pièce à traiter par l'outil-pince. Ces réglages étant faits pour toute la série d'opérations répétitives à réaliser, l'opérateur n'a plus qu'à agir sur la gâchette de commande 135a du second organe de commande 135 pour pincer, sertir, couper, selon l'outil-pince qu'il emploie.

La liaison pneumatique entre l'actionneur 120 et les premier et second organes de commande 133 et 135 est réalisée par des canalisations souples et flexibles, regroupées en faisceau 139 pour ne pas nuire à la maniabilité de l'organe de préhension 160 et de l'outil-pince.

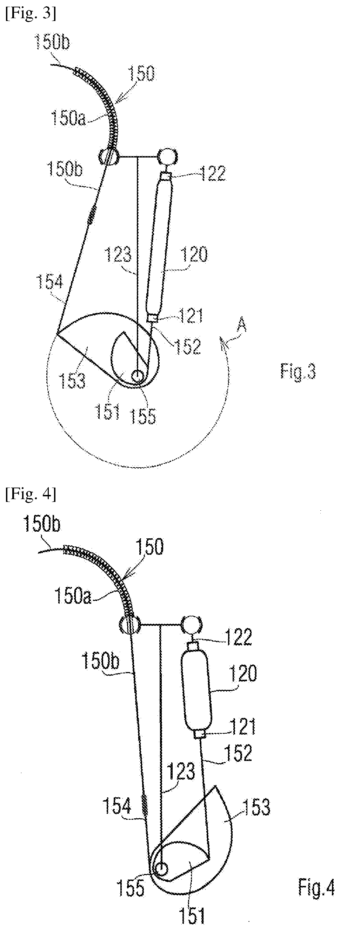

Aux Figures 3 et 4, on a représenté schématiquement un dispositif d'assistance dont l'actionneur est dans un état inactif ([Fig.3]) et dans un état actif ([Fig.4]), ce dispositif d'assistance étant supposé équiper un outil-pince.

A la [Fig.3], l'actionneur 120 est détendu. Le câble 150b de la transmission de Bowden est alors sorti au maximum de sa course du côté de l'outil-pince dont les mâchoires sont alors dans leur état d'ouverture maximale, sous l'effet par exemple de l'organe élastique de rappel équipant ledit outil-pince. L'opérateur, voulant serrer les mâchoires de l'outil-pince, empoigne l'organe de préhension 160 de manière à manœuvrer l'outil-pince pour le positionner dans sa zone de travail, au besoin en s'aidant de l'autre main. Il agit ensuite sur le premier organe de commande 133 et sur le second organe de commande 135 pour piloter l'alimentation de l'actionneur 120. Le gonflage de l'actionneur 120 ([Fig.4]) conduit à son raccourcissement, entraînant la rotation de la ou de chaque came-disque menante 151 dans le sens de la flèche A, laquelle entraîne une rotation angulaire identique de la came-disque menée 153 et l'enroulement du lien souple 154 sur son profil d'enroulement. Le câble 150b de la transmission de Bowden est donc rétracté dans la gaine 150a au niveau de l'outil-pince, ce qui provoque la fermeture des mâchoires de ce dernier. Le profil d'enroulement/ déroulement des cames-disques menante et menée est déterminé pour disposer de la démultiplication la plus favorable pour un minimum d'encombrement et de l'effort utile de serrage le plus adapté au type d'outil-pince auquel le dispositif de l'invention est destiné.

Dans un mode de réalisation du dispositif d'assistance, l'actionneur 120 est disposé avec son support rigide, dans un carter, non représenté, par exemple portatif, enfermant également la source d'énergie (batterie ou bonbonne de gaz comprimé). Ce carter pourra être transparent afin que l'opérateur puisse visuellement vérifier ou constater le fonctionnement de l'actionneur.

On a précédemment décrit un dispositif d'assistance doté d'un organe de préhension 160 prévu pour être saisi par l'utilisateur afin de pouvoir positionner l'outil-pince 1 librement dans l'espace de travail et actionner ce dernier. Selon une variante d'exécution, le dispositif d'assistance est porté par une structure support, rigide 180 recevant en fixation un doigt d'immobilisation 143c fileté rigidement fixé à l'une des platines 143 de l'un des mécanismes de fixation 140. Une telle disposition permet l'immobilisation de l'outil-pince 1 dans la position choisie par l'utilisateur. Selon cette forme de réalisation, les organes de commande 133 et 135 ne sont plus logés dans un organe de préhension 160 fixé à l'un des mécanismes de fixation 140, mais sont logés dans une poignée ou dans un mécanisme à pédale d'actionnement, ladite poignée et ledit mécanisme à pédale étant librement déplaçables par rapport aux mécanismes de fixation 140.

Comme on peut le voir en [Fig.16], la structure support 180 comprend un socle 181 auquel est fixé un montant vertical 182 portant de manière ajustable en hauteur, en inclinaison et en éloignement, une potence 183 à laquelle est fixée de manière amovible l'un des mécanismes de fixation par l'entremise du doigt fileté et d'un écrou à oreilles engagé en vissage sur le doigt fileté. Le montant 182 et la potence 183 présentent chacun une aile basale et deux ailes latérales dotées chacune d'une lumière oblongue. Le montant 182 est fixé par son aile basale au socle 181. Les lumières oblongues du montant 182 et de la potence 183 reçoivent chacune un boulon de fixation de l'un à l'autre. L'aile basale de la potence 183 est dotée d'un perçage traversant dans lequel est engagé le doigt fileté 143c.

### Avantages de l'invention

Les avantages de l'invention sont nombreux. En premier lieu, on mentionnera la souplesse d'utilisation du dispositif, l'actionneur pouvant être éloigné de la zone de travail pour que l'opérateur puisse utiliser son outil-pince comme bon lui semble. La légèreté, l'aisance de son adaptabilité, le peu d'encombrement et l'autonomie énergétique du dispositif lui permettent d'être employé dans n'importe quelles conditions d'utilisation (en atelier, en extérieur, etc..) et même d'être portatif dans un sac à dos de l'opérateur. L'actionneur peut être avantageusement enfermé dans un carter l'enveloppant avec la structure de son support, carter qui, transparent, permet la visualisation par l'opérateur de la quantité d'assistance qu'il peut utiliser en voyant le comportement de l'actionneur pneumatique.

Il va de soi que la présente invention peut recevoir tous aménagements et variantes du domaine des équivalents techniques sans pour autant sortir du cadre du présent brevet tel que défini par les revendications ci-après.

## Revendications

1. Dispositif (100) d'assistance à la manœuvre d'un outil-pince (1), lequel outil-pince est du type de ceux possédant deux branches (2, 3) articulées autour d'au moins un axe (4) qui divise chaque branche en une mâchoire (2a, 3a) et une poignée (2b, 3b), dans lequel il comporte: :
- deux mécanismes de fixation (140) prévus pour être montés de manière amovible, en serrage pour l'un sur l'une des poignées de l'outil-pince et pour l'autre sur l'autre poignée,
- une unité d'actionnement (110) **caractérisé en ce que** l'unité d'actionnement est équippée
- d'un actionneur (120) constitué par un organe moteur possédant un élément actif (121) sur lequel un mouvement et un effort de traction sont disponibles, ledit élément actif (121) étant déplaçable le long d'une course travail entre une position d'origine et une position finale, et ensuite le long d'une course retour entre la position finale et la position d'origine, ledit actionneur (120) étant fixé à un support rigide,
- d'un moyen de transmission d'effort et de mouvement comportant ou formé par une transmission de Bowden (150), solidarisée aux deux mécanismes de fixation (140) et liée cinématiquement à l'élément actif (121) de l'actionneur (120) afin que l'activation de l'actionneur (120) conduise au rapprochement et au serrage des deux mâchoires de l'outil-pince lorsque ce dernier est solidarisé aux deux mécanismes de fixation, ladite transmission de Bowden étant formée d'une gaine souple et d'un câble monté en coulissement dans la gaine souple,
et **en ce que** l'unité d'actionnement est en outre équipée d'un circuit de commande et de puissance (130), fonctionnellement associé à l'actionneur (120) que comporte l'unité d'actionnement (110), ledit circuit comportant au moins un organe de commande (133, 135) par action duquel est délivré un signal d'activation de l'actionneur, ledit organe de commande (133, 135) étant prévu pour être actionné manuellement par l'utilisateur de l'outil-pince.

2. Dispositif la revendication précédente, **caractérisé en ce que** chaque mécanisme de fixation (140) est formé, d'une part d'un collier (141) ouvert et d'un moyen de constriction (142) prévus tous deux pour être engagés autour de l'une des poignées de l'outil-pince, et d'autre part d'une platine (143) rigidement fixée au collier ouvert et recevant au moins l'un des éléments de la transmission de Bowden (150).

3. Dispositif selon l'une quelconque des revendications précédentes, **caractérisé en ce que** l'unité d'actionnement est dotée d'un moyen de transmission de mouvement et d'effort, de raison variable au cours de la course travail de l'élément actif (121) de l'actionneur (120), ledit moyen étant couplé d'une part à l'élément actif (121) de l'actionneur (120) et d'autre part au câble (150b) de la transmission de Bowden.

4. Dispositif selon la revendication précédente, **caractérisé en ce que** la raison du moyen de transmission du mouvement et d'effort est, au cours de la course travail de l'élément actif (121) de l'actionneur (120), d'abord supérieure à l'unité et ensuite en fin de course travail, est inférieure à l'unité.

5. Dispositif selon la revendication 3 ou la revendication 4,
**caractérisé en ce qu'**il est doté :
- d'au moins une came-disque menante (151) agencée en poulie à gorge, entraînée en rotation par le mouvement de l'élément actif (121) de l'actionneur, par l'entremise d'au moins un premier lien souple d'entraînement, inextensible, apte à être enroulé sur la came-disque menante (151), ledit premier lien souple étant fixé d'une part à l'élément actif (121) de l'actionneur (120) et d'autre part à la came-disque menante (151),
- d'au moins une came-disque menée (153) agencée en poulie à gorge, en relation de coaxialité avec la came-disque menante (151) et accouplée à cette dernière, le câble (150b) de la transmission de Bowden étant solidarisé à la came-disque menée (153) par l'entremise d'au moins un second lien souple (154) d'entraînement, inextensible, apte à être enroulé sur la came-disque menée (153), ledit second lien étant fixé d'une part à la came-disque menée (153) et d'autre part au câble (150b) de la transmission de Bowden (150),
- lesdites deux cames-disques menante (151) et menée (153) étant montées en rotation sur un même axe (155) porté par le support rigide.

6. Dispositif selon la revendication précédente, **caractérisé en ce que** le rayon d'enroulement déterminé par le profil de chaque came-disque, est progressivement croissant pour la ou chaque came-disque menante (151) et progressivement décroissant pour la ou chaque came-disque menée (153), en considérant le sens de leur mouvement de rotation depuis une position d'origine correspondant à l'état inactif de l'actionneur selon lequel il est axialement déployé, vers une position finale correspondant à l'état actif de l'actionneur (120) selon lequel il est axialement contracté.

7. Dispositif selon la revendication précédente, **caractérisé en ce que** chaque came-disque menante (151) et menée (153) présente un profil en spirale logarithmique.

8. Dispositif selon la revendication précédente, **caractérisé en ce que** l'actionneur (120) se présente sous la forme d'un « muscle » formé d'une enceinte étanche, élastiquement déformable et substantiellement longiforme, prévue pour être alimentée en fluide sous pression, présentant deux extrémités axialement opposées, dont la première est équipée de l'élément actif (121) et la seconde d'un organe de fixation (122) au support rigide, ladite enceinte étant apte à se contracter axialement sous l'effet d'un accroissement de la pression du fluide introduit dans son volume interne.

9. Dispositif selon la revendication précédente, **caractérisé en ce que** l'actionneur (120) est solidarisé par son organe de fixation à un joint rotule fixé au support rigide.

10. Dispositif selon la revendication 8 ou la revendication 9, **caractérisée en ce que** l'actionneur 120 est solidarisé au support rigide de manière ajustable en position axiale afin de pouvoir ajuster l'allonge du câble (150b) de la transmission de Bowden (150).

11. Dispositif selon l'une quelconque des revendications précédentes, **caractérisé en ce que** le circuit de commande est adapté à maintenir les mâchoires de l'outil-pince dans une position d'attente, de pré-serrage, intermédiaire entre leur position de pleine ouverture et leur position de pleine fermeture.

12. Dispositif selon l'une quelconque des revendications précédentes, **caractérisé en ce que** le circuit de commande (130) comprend deux organes de commande (133, 135) formés pour l'un (133) par un distributeur marche/arrêt monostable, normalement fermé, de pilotage d'une vanne (132) d'alimentation en fluide sous pression de l'actionneur (120) par l'entremise d'un conduite d'alimentation (120a) et pour l'autre (135) d'une vanne d'échappement, normalement ouverte, installée sur un canal de fuite (134) raccordé par un piquage à la conduite d'alimentation (120a), un réducteur de débit (136), réglable, étant installé sur la conduite d'alimentation (120a).

13. Dispositif selon l'une quelconque des revendications précédentes, **caractérisé en ce que** l'un au moins des mécanismes de fixation (140) porte un organe de préhension (160) et de manipulation prévu pour être saisi par l'utilisateur de l'outil-pince en vue de la manipulation de ce dernier, ledit organe de préhension (160) étant équipé de l'organe de commande (133, 135) que comporte le circuit de commande et de puissance (130).

14. Dispositif selon l'une quelconque des revendications 1 à 13, **caractérisé en ce qu'**il est porté par une structure support, rigide (180) recevant en fixation un doigt d'immobilisation (143c) fileté rigidement fixé à l'une des platines (143) de l'un des mécanismes de fixation (140).

15. Dispositif selon la revendication précédente, **caractérisé en ce que** les organes de commande (133, 135) sont logés dans une poignée ou dans un mécanisme à pédale d'actionnement, ladite poignée et ledit mécanisme à pédale étant librement déplaçables par rapport aux mécanismes (140) de fixation.

## Patentansprüche

1. Vorrichtung (100) zur Unterstützung beim Betätigen eines Zangenwerkzeugs (1), wobei das Zangenwerkzeug solcher Art ist, dass es zwei Schenkel (2, 3) besitzt, die um mindestens eine Achse (4) gelenkig angeordnet sind, welche jeden Schenkel in eine Backe (2a, 3a) und einen Griff (2b, 3b) unterteilt, wobei sie umfasst:
- zwei Befestigungsmechanismen (140), die so vorgesehen sind, dass sie abnehmbar montiert werden können, wobei der eine an einem der Griffe des Zangenwerkzeugs und der andere am anderen Griff eingespannt wird,
- eine Betätigungseinheit (110), **dadurch gekennzeichnet, dass** die Betätigungseinheit ausgestattet ist
- mit einem Stellglied (120), das aus einem Antriebselement besteht, das ein aktives Element (121) besitzt, an dem eine Bewegung und eine Zugkraft zur Verfügung stehen, wobei das aktive Element (121) entlang eines Arbeitshubs zwischen einer Ausgangsposition und einer Endposition sowie anschließend entlang eines Rückhubs zwischen der Endposition und der Ausgangsposition bewegbar ist, wobei das Stellglied (120) an einer starren Halterung befestigt ist,
- mit einem Kraft- und Bewegungsübertragungsmittel, das einen Bowdenzug (150) umfasst oder aus diesem besteht, der fest mit den beiden Befestigungsmechanismen (140) verbunden und kinematisch mit dem aktiven Element (121) des Stellglieds (120) verbunden ist, damit die Betätigung des Stellglieds (120) zum Aneinanderführen und Zusammenpressen der beiden Backen des Zangenwerkzeugs führt, wenn dieses fest mit den beiden Befestigungsmechanismen verbunden ist, wobei der Bowdenzug aus einer flexiblen Hülle und einem in der flexiblen Hülle frei gleitenden Seil besteht,
und dass die Betätigungseinheit ferner mit einer Steuer- und Leistungsschaltung (130) ausgestattet ist, die funktional dem in der Betätigungseinheit (110) enthaltenen Stellglied (120) zugehörig ist, wobei die Schaltung mindestens ein Steuerelement (133, 135) umfasst, durch dessen Betätigung ein Signal zur Aktivierung des Stellglieds ausgegeben wird, wobei das Steuerelement (133, 135) dazu vorgesehen ist, vom Benutzer des Zangenwerkzeugs manuell betätigt zu werden.

2. Vorrichtung nach vorstehendem Anspruch, **dadurch gekennzeichnet, dass** jeder Befestigungsmechanismus (140) einerseits aus einer offenen Klemme (141) und einem Klemmmittel (142) besteht, die beide dazu vorgesehen sind, um einen der Griffe des Zangenwerkzeugs gelegt zu werden, und andererseits aus einer Platte (143), die fest mit der offenen Klemme verbunden ist und mindestens eines der Elemente des Bowdenzugs (150) aufnimmt.

3. Vorrichtung nach einem der vorstehenden Ansprüche, **dadurch gekennzeichnet, dass** die Betätigungseinheit mit einem Bewegungs- und Kraftübertragungsmittel ausgestattet ist, dessen Übersetzungsverhältnis sich im Verlauf des Arbeitshubs des aktiven Elements (121) des Stellglieds (120) ändert, wobei das Mittel einerseits mit dem aktiven Element (121) des Stellglieds (120) und andererseits mit dem Zugseil (150b) des Bowdenzugs gekoppelt ist.

4. Vorrichtung nach vorstehendem Anspruch, **dadurch gekennzeichnet, dass** das Übersetzungsverhältnis des Bewegungs- und Kraftübertragungsmittels während des Arbeitshubs des aktiven Elements (121) des Stellglieds (120) zunächst größer als eins ist und am Ende des Arbeitshubs kleiner als eins ist.

5. Vorrichtung nach Anspruch 3 oder Anspruch 4, **dadurch gekennzeichnet, dass** sie umfasst:
- mindestens eine als Rillenscheibe ausgebildete antreibende Nockenscheibe (151), die durch die Bewegung des aktiven Elements (121) des Stellglieds über mindestens ein erstes, nicht dehnbares, flexibles Antriebsband, das auf die antreibende Nockenscheibe (151) aufgewickelt werden kann, in Drehung versetzt wird, wobei das erste flexible Band einerseits am aktiven Element (121) des Stellglieds (120) und andererseits an der antreibenden Nockenscheibe (151) befestigt ist,
- mindestens eine als Rillenscheibe ausgebildete angetriebene Nockenscheibe (153), die koaxial zur antreibenden Nockenscheibe (151) angeordnet und mit dieser gekoppelt ist, wobei das Zugseil (150b) des Bowdenzugs über mindestens ein zweites flexibles, nicht dehnbares Antriebsband (154), das auf die angetriebene Nockenscheibe (153) aufgewickelt werden kann, fest mit der angetriebenen Nockenscheibe (153) verbunden ist, wobei das zweite Band einerseits an der angetriebenen Nockenscheibe (153) und andererseits am Zugseil (150b) des Bowdenzugs (150) befestigt ist,
- wobei die antreibende (151) und die angetriebene (153) Nockenscheibe drehbar auf derselben Achse (155) montiert sind, die von der starren Halterung getragen wird.

6. Vorrichtung nach vorstehendem Anspruch, **dadurch gekennzeichnet, dass** der durch das Profil jeder Nockenscheibe bestimmte Wickelradius bei der oder jeder antreibenden Nockenscheibe (151) allmählich zunimmt und bei der oder jeder angetriebenen Nockenscheibe (153) allmählich abnimmt, unter Berücksichtigung der Richtung ihrer Drehbewegung ausgehend von einer Ausgangsposition, die dem inaktiven Zustand des Stellglieds entspricht, in welchem es axial ausgestreckt ist, hin zu einer Endposition, die dem aktiven Zustand des Stellglieds (120) entspricht, in welchem es axial zusammengezogen ist.

7. Vorrichtung nach vorstehendem Anspruch, **dadurch gekennzeichnet, dass** jede antreibende (151) und jede angetriebene (153) Nockenscheibe ein logarithmisches Spiralprofil aufweist.

8. Vorrichtung nach vorstehendem Anspruch, **dadurch gekennzeichnet, dass** das Stellglied (120) die Form eines "Muskels" aufweist, der aus einem dichten Gehäuse besteht, das elastisch verformbar und im Wesentlichen länglich ist, zur Versorgung mit einem unter Druck stehenden Fluid vorgesehen ist und zwei axial gegenüberliegende Enden aufweist, von denen das erste mit dem aktiven Element (121) und das zweite mit einem Befestigungselement (122) an der starren Halterung ausgestattet ist, wobei das Gehäuse in der Lage ist, sich unter der Wirkung eines Druckanstiegs des in sein Innenvolumen eingespeisten Fluids axial zusammenzuziehen.

9. Vorrichtung nach vorstehendem Anspruch, **dadurch gekennzeichnet, dass** das Stellglied (120) über sein Befestigungselement mit einem an der starren Halterun befestigten Kugelgelenk verbunden ist.

10. Vorrichtung nach Anspruch 8 oder Anspruch 9, **dadurch gekennzeichnet, dass** das Stellglied 120 in axialer Richtung verstellbar an der starren Halterung befestigt ist, um die Zuglänge des Zugseils (150b) des Bowdenzugs (150) einstellen zu können.

11. Vorrichtung nach einem der vorstehenden Ansprüche, **dadurch gekennzeichnet, dass** die Steuerschaltung dazu ausgelegt ist, die Backen des Zangenwerkzeugs in einer Warte- bzw. Vorspannposition zu halten, die zwischen ihrer vollständig geöffneten und ihrer vollständig geschlossenen Position liegt.

12. Vorrichtung nach einem der vorstehenden Ansprüche, **dadurch gekennzeichnet, dass** die Steuerschaltung (130) zwei Steuerelemente (133, 135) umfasst, von denen das eine (133) aus einem monostabilen, in Ruhestellung geschlossenen Ein-/Aus-Verteiler zur Ansteuerung eines Ventils (132) zur Versorgung des Stellglieds (120) mit unter Druck stehendem Fluid über eine Versorgungsleitung (120a) besteht, und das andere (135) aus einem in Ruhestellung geöffneten Auslassventil, das an einem Leckagekanal (134) angebracht ist, der über eine Abzweigung mit der Versorgungsleitung (120a) verbunden ist, wobei an der Versorgungsleitung (120a) ein einstellbarer Durchflussbegrenzer (136) angebracht ist.

13. Vorrichtung nach einem der vorstehenden Ansprüche, **dadurch gekennzeichnet, dass** mindestens einer der Befestigungsmechanismen (140) ein Greif- und Handhabungselement (160) trägt, das dazu vorgesehen ist, vom Benutzer des Zangenwerkzeugs zur Handhabung desselben erfasst zu werden, wobei das Greifelement (160) mit dem Steuerelement (133, 135) ausgestattet ist, das Teil der Steuer- und Leistungsschaltung (130) ist.

14. Vorrichtung nach einem der Ansprüche 1 bis 13, **dadurch gekennzeichnet, dass** sie von einer starren Tragkonstruktion (180) aufgenommen wird, die zum Befestigen einen mit Gewinde versehenen Feststellstift (143c) umfasst, der fest mit einer der Platten (143) eines der Befestigungsmechanismen (140) verbunden ist.

15. Vorrichtung nach vorstehendem Anspruch, **dadurch gekennzeichnet, dass** die Steuerelemente (133, 135) in einem Griff oder in einem Fußpedalmechanismus untergebracht sind, wobei der Griff und der Fußpedalmechanismus in Bezug auf die Befestigungsmechanismen (140) frei beweglich sind.

## Claims

1. A device (100) for facilitating the operation of a gripping tool (1), said gripping tool is of the type having two branches (2, 3) articulated about at least one axis (4) which divides each branch into a jaw (2a, 3a) and a handle (2b, 3b), wherein it comprises:
- two fastening mechanisms (140) provided to be removably mounted by clamping, one on one of the handles of the gripping tool and the other on the other handle,
- an actuating unit (110), **characterised in that** the actuating unit is equipped with
- an actuator (120) consisting of a drive member having an active element (121) on which a movement and a tensile force are available, said active element (121) being movable along a working stroke between an initial position and a final position, and then along a return stroke between the final position and the initial position, said actuator (120) being fixed to a rigid support,
- a force and movement transmission means comprising or formed by a Bowden transmission (150), secured to the two fastening mechanisms (140) and kinematically connected to the active element (121) of the actuator (120) such that the activation of the actuator (120) causes the two jaws of the gripping tool to move towards one another and clamp when the latter is secured to the two fastening mechanisms, said Bowden transmission being formed by a flexible sheath and a cable slidably mounted in the flexible sheath,
and **in that** the actuating unit is further equipped with a control and power circuit (130), functionally associated with the actuator (120) comprised in the actuating unit (110), said circuit comprising at least one control member (133, 135), an actuation of which causes an actuator activation signal to be delivered, said control member (133, 135) being configured to be manually actuated by the user of the gripping tool.

2. The device according to the preceding claim, **characterised in that** each fastening mechanism (140) is formed, on the one hand, by an open collar (141) and a constriction means (142) both provided to be engaged around one of the handles of the gripping tool, and, on the other hand, by a plate (143) rigidly fixed to the open collar and receiving at least one of the elements of the Bowden transmission (150).

3. The device according to any one of the preceding claims, **characterised in that** the actuating unit is provided with force and movement transmission means, having a ratio that varies during the working stroke of the active element (121) of the actuator (120), said means being coupled, on the one hand, to the active element (121) of the actuator (120) and, on the other hand, to the cable (150b) of the Bowden transmission.

4. The device according to the preceding claim, **characterised in that** the ratio of the movement and force transmission means is, during the working stroke of the active element (121) of the actuator (120), first greater than unity and then at the end of the working stroke, less than unity.

5. The device according to claim 3 or claim 4, **characterised in that** it is provided with:
- at least one driving cam disk (151) arranged as a grooved pulley, driven in rotation by the movement of the active element (121) of the actuator, by means of at least one first flexible, inextensible drive link capable of being wound onto the driving cam disk (151), said first flexible link being, on the one hand, fixed to the active element (121) of the actuator (120) and, on the second hand, to the driving cam disk (151),
- at least one driven cam disc (153) arranged as a grooved pulley, in coaxial relationship with the driving cam disc (151) and coupled to the latter, the cable (150b) of the Bowden transmission being secured to the driven cam disc (153) by means of at least one second flexible, inextensible drive link (154) capable of being wound on the driven cam disc (153), said second link being fixed, on the one hand, to the driven cam disc (153) and, on the other hand, to the cable (150b) of the Bowden transmission (150),
- said two driving (151) and driven (153) cam disks being rotatably mounted on the same axis (155) carried by the rigid support.

6. The device according to the preceding claim, **characterised in that** the winding radius determined by the profile of each cam disk is progressively increasing for the or each driving cam disk (151) and progressively decreasing for the or each driven cam disk (153), considering the direction of their rotational movement from an initial position corresponding to the inactive state of the actuator in which it is axially deployed, to a final position corresponding to the active state of the actuator (120) in which it is axially contracted.

7. The device according to the preceding claim, **characterised in that** each driving (151) and driven (153) cam disk has a logarithmic spiral profile.

8. The device according to the preceding claim, **characterised in that** the actuator (120) is in the form of a "muscle" formed by a sealed, elastically deformable and substantially elongate enclosure, provided to be supplied with pressurised fluid, having two axially opposite ends, the first of which is equipped with the active element (121) and the second with a member (122) for fixing to the rigid support, said enclosure being capable of contracting axially under the effect of an increase in the pressure of the fluid introduced into its internal volume.

9. The device according to the preceding claim, **characterised in that** the actuator (120) is secured by its fixing member to a ball joint fixed to the rigid support.

10. The device according to claim 8 or claim 9, **characterised in that** the actuator 120 is secured to the rigid support in an axially adjustable manner in order to be able to adjust the extension of the cable (150b) of the Bowden transmission (150).

11. The device according to any one of the preceding claims, **characterised in that** the control circuit is adapted to hold the jaws of the gripping tool in a waiting, pre-clamping position, intermediate between their fully open position and their fully closed position.

12. The device according to any one of the preceding claims, **characterised in that** the control circuit (130) comprises two control members (133, 135), one (133) formed by a monostable on/off distributor, normally closed, for controlling a valve (132) for supplying pressurised fluid to the actuator (120) by means of a supply line (120a), and the other (135) formed by an exhaust valve, normally open, installed on a leakage channel (134) connected by a tapping to the supply line (120a), an adjustable flow reducer (136) being installed on the supply line (120a).

13. The device according to any one of the preceding claims, **characterised in that** at least one of the fastening mechanisms (140) carries a gripping and handling member (160) intended to be gripped by the user of the gripping tool in order to manipulate the latter, said gripping member (160) being equipped with the control member (133, 135) comprised in the control and power circuit (130).

14. The device according to any one of claims 1 to 13, **characterised in that** it is carried by a rigid support structure (180) fixedly carrying a threaded immobilising pin (143c) rigidly fixed to one of the plates (143) of one of the fastening mechanisms (140).

15. The device according to the preceding claim, **characterised in that** the control members (133, 135) are housed in a handle or in an actuating pedal mechanism, said handle and said pedal mechanism being freely movable relative to the fastening mechanisms (140).
